# EUROPEAN PATENT SPECIFICATION

(11) **EP 4 469 853 B1**
(45) Date of publication and mention of the grant of the patent: **24.12.2025**
(21) Application number: 23700233.2
(22) Date of filing: 05.01.2023
(51) Int. Cl.: G02B 27/01, G02B 27/00, G02B 5/18

(54) **DISPLAY COMPONENT**
ANZEIGEKOMPONENTE
COMPOSANT D'AFFICHAGE

(30) Priority: 25.01.2022 FI 20225058
(43) Date of publication of application: 04.12.2024
(73) Proprietor: Dispelix Oy, 02130 Espoo (FI)
(72) Inventor: MALKAMÄKI, Aapo, 02130 Espoo (FI)
(74) Representative: Dantz, Dirk
(86) International application number: PCT/FI2023/050015
(87) International publication number: WO 2023/144441

(56) References cited:
- CN-A- 112 180 589
- US-A1- 2017 315 346
- US-A1- 2017 322 426
- US-A1- 2019 187 474
- US-B1- 10 935 730

## Description

### TECHNICAL FIELD

The present disclosure relates to the field of diffractive optics, and more particularly to a display component and a display device.

### BACKGROUND

Making small formfactor augmented reality (AR) glasses requires a small projector, such as a laser projector. Currently waveguides used in AR glasses have technical challenges with obtaining a uniform image with laser projectors while simultaneously achieving a high optical efficiency. Some waveguide designs can achieve good uniformity, but poor efficiency, while other designs have better efficiency but poor uniformity. Prior art is represented by US10935730B1.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an object to provide a display component and a display device. The foregoing and other objects are achieved by the features of the independent claims. Further implementation forms are apparent from the dependent claims, the description and the figures.

According to a first aspect, a display component comprises: a waveguide; an in-coupling structure configured to couple a set of input beams into the waveguide as a first set of in-coupled beams associated with a first set of in-coupled k vectors lying in a first domain in k-space in an annular guided propagation domain associated with the waveguide; an exit pupil expansion structure comprising a diffractive grating and configured to receive the first set of in-coupled beams and to diffract the first set of in-coupled beams in a first plurality of directions in k-space to form three sets of guided beams associated with three sets of k vectors lying in a first set of three domains within the annular guided propagation domain including the first domain; an out-coupling structure configured to receive, from the exit pupil expansion structure, a first diffracted set of beams associated with a diffracted set of k vectors lying in at least one of the domains in the first set of three domains, and to out-couple the first diffracted set of beams from the waveguide as a set of output beams.

According to second aspect, a display device comprises a display component according to the first aspect.

Many of the attendant features will be more readily appreciated as they become better understood by reference to the following detailed description considered in connection with the accompanying drawings.

### DESCRIPTION OF THE DRAWINGS

In the following, example embodiments are described in more detail with reference to the attached figures and drawings, in which:
Fig. 1 illustrates a schematic representation of a display component according to an embodiment;
Fig. 2 illustrates a k-space representation of beams diffracted by an in-coupling structure and by an exit pupil expansion structure according to an embodiment;
Fig. 3 illustrates a k-space representation of beams diffracted by an exit pupil expansion structure according to another embodiment;
Fig. 4 illustrates a k-space representation of beams diffracted by an in-coupling structure and by an exit pupil expansion structure according to an embodiment;
Fig. 5 illustrates a k-space representation of beams diffracted by an out-coupling structure according to an embodiment;
Fig. 6 illustrates a k-space representation of beams further diffracted by an exit pupil expansion structure according to an embodiment;
Fig. 7 illustrates a schematic representation of diffractive grating lattice structures according to an embodiment;
Fig. 8 illustrates a schematic representation of beams in an exit pupil expansion structure according to an embodiment;
Fig. 9 illustrates a schematic representation of correspondence between the set of input beams and the set of output beams;
Fig. 10 illustrates a schematic representation of simulation results according to a plurality of embodiments; and
Fig. 11 illustrates a schematic representation of simulation results according to another plurality of embodiments;
Fig. 12 illustrates a schematic representation of simulation results according to another plurality of embodiments.

In the following, identical reference signs refer to similar or at least functionally equivalent features.

### DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

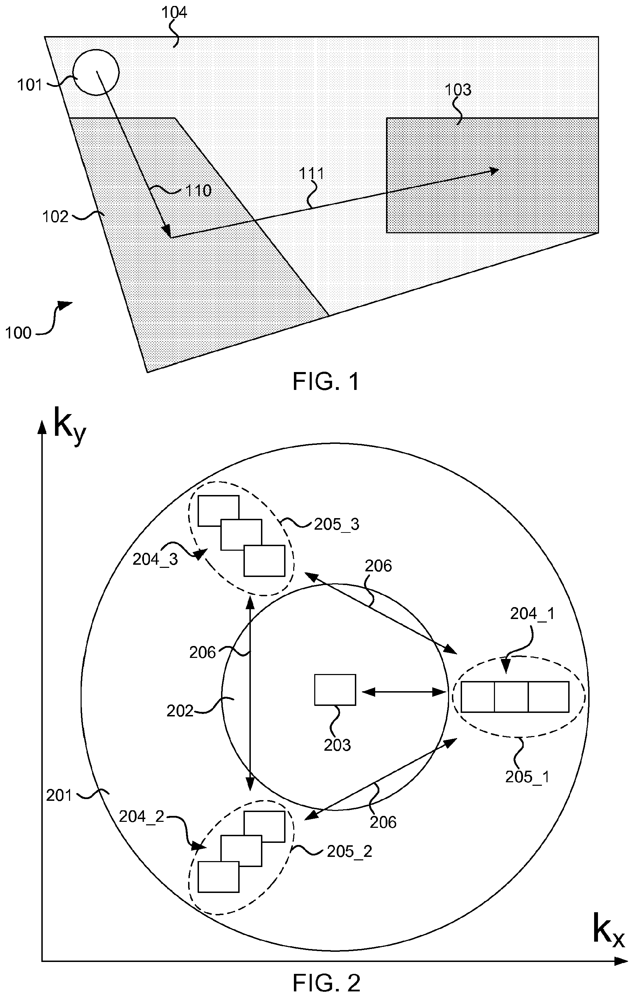

Fig. 1 illustrates a schematic representation of a display component according to an embodiment.

According to an embodiment, a display component 100 comprises a waveguide 104 and an in-coupling structure 101 configured to couple a set of input beams into the waveguide 104 as a first set of in-coupled beams 110 associated with a first set of in-coupled k-vectors lying in a first domain in k-space in an annular guided propagation domain associated with the waveguide 104.

Herein, a beam may also be referred to as a ray, a light beam, a light ray, or similar.

The set of input beams may be generated by, for example, a scanner-based optical engine. The set of input beams may represent an image generated by, for example, such an optical engine.

The waveguide 104 may be, for example, a substantially planar waveguide. For example, the waveguide may correspond to a lens of augmented reality (AR) glasses.

The in-coupling structure 101 may comprise, for example, a diffractive grating on a surface of the waveguide. Thus, the in-coupling structure 101 may couple the set of input beams into the waveguide 104 via diffraction.

The display component 100 may further comprise an exit pupil expansion (EPE) structure 102 comprising a diffractive grating and configured to receive the first set of in-coupled beams 110 and to diffract the first set of in-coupled beams 110 in a first plurality of directions in k-space to form three sets of guided beams associated with three sets of k-vectors lying in a first set of three domains within the annular guided propagation domain including the first domain.

The diffractive grating of the EPE structure 102 may be positioned, for example, on at least one surface of the waveguide 104.

The display component 100 may further comprise an out-coupling structure 103 configured to receive, from the EPE structure 102, a first diffracted set of beams 111 associated with a diffracted set of k-vectors lying in at least one of the domains in the first set of three domains, and to out-couple the first diffracted set of beams 111 from the waveguide 104 as a set of output beams.

The out-coupling structure 103 may comprise, for example, a diffractive grating on a surface of the waveguide. Thus, the out-coupling structure 103 may out-couple the first diffracted set of beams 111 from the waveguide 104 via diffraction.

The set of output beams may represent, for example, an expanded version of the image formed by the set of input beams.

It should be understood that the geometry of the display component 100 illustrated in the embodiment of Fig. 1 is only exemplary and the display component 100 may be implemented in various other ways.

According to an embodiment, a display device comprises the display component 100.

The display device may comprise a scanner-based optical engine, e.g., a laser-scanning optical engine, for directing the set of input beams to the in-coupling structure 101.

The display device may be implemented as, for example, a see-through display device.

The display device may be implemented as, for example, a head-mounted display device.

Fig. 2 illustrates a k-space representation of beams diffracted by an exit pupil expansion structure according to an embodiment.

Herein, the annular guided propagation domain 201 may refer to a part of the k-space in which beams are guided inside the waveguide 104. An example of an annular guided propagation domain 201 is illustrated in the embodiment of Fig. 2.

Each k-vector in k-space can represent a propagation direction of a beam inside the waveguide 104. The magnitude of each k-vector corresponds to a wave-number ***k.*** A k-vector can be expressed as ***k=nv̂,*** where *n* is the refractive index of the medium and ***v̂*** is a unit vector pointing towards the propagation direction of the k-vector. ***k*** my also be referred to as a normalized k-vector.

The waveguide 104 can guide beams having certain k-vectors via total internal reflection (TIR). The coupling domain 202 correspond to k-vectors that do not have sufficient *x* and/or *y* components to be guided inside the waveguide via TIR. Here, the *x* and *y* axes are in the plane of the waveguide 104 while the *z* axis is along a thickness direction of the waveguide 104. For such beams, the angle between the beam and the surface(s) of the waveguide 104 is not sufficient to cause TIR as governed by Snell's law. K-vectors inside the annular guided propagation domain 201 have sufficient *x* and/or *y* components to be guided inside the waveguide via TIR. K-vectors at the outer circumference of the annular guided propagation domain 201 correspond to beams propagating along the plane of the waveguide 104, i.e. such beams do not have any *z* component. Radius of the coupling domain 202 may be 1 and radius of the annular guided propagation domain 201 may be *n*.

The in-coupling structure 101 can couple the set of input beams into the waveguide 104 as a first set of in-coupled beams 110 associated with a first set of in-coupled k-vectors 204_1 lying in a first domain 205_1 in k-space.

For example, in the embodiment of Fig. 2, k-vectors 203 corresponding to the set of input beams are located in the coupling domain 202 of the k-space. The in-coupling structure 101 can couple the set of input beams into the waveguide 104 as the first set of in-coupled beams 110 associated with a first set of in-coupled k-vectors 204_1 lying in a first domain 205_1 in k-space.

The in-coupling structure 101 may comprise, for example, a diffractive grating that can couple the set of input beams into the waveguide 104. As can be seen in the embodiment of Fig. 2, since the first set of in-coupled k-vectors 204_1 is inside the annular guided propagation domain 201, the corresponding first set of in-coupled beams 110 are guided inside the waveguide 104 via TIR.

The different k-vectors in the first set of in-coupled k-vectors 204_1 may correspond to, for example, different colours and/or different parts of an image represented by the set of input beams. For example, the set of input beams may comprise green, blue, and red channels. Due to the different wavelength/frequency of each such colour channel, each colour may occupy a different part of the k-space. For example, in the embodiment of Fig. 2, each of the three rectangles in the first set of in-coupled k-vectors 204_1 may correspond to a colour channel of the image represented by the set of input beams.

The EPE structure 102 can receive the first set of in-coupled beams 110 and diffract the first set of in-coupled beams 110 in a first plurality of directions 206 in k-space to form three sets of guided beams associated with three sets of k-vectors 204_1, 204_2, 204_3 lying in a first set of three domains 205_1, 205_2, 205_3 within the annular guided propagation domain 201 including the first domain 205_1.

The out-coupling structure 103 can receive, from the EPE structure 102, a first diffracted set of beams 111 associated with a diffracted set of k-vectors lying in at least one of the domains in the first set of three domains 205_1, 205_2, 205_3, and to out-couple the first diffracted set of beams 111 from the waveguide as a set of output beams.

The out-coupling structure 103 can comprise, for example, a diffractive grating that can out-couple the first diffracted set of beams from the waveguide 104 as a set of output beams. In terms of k-space representation, this could be illustrated as the out-coupling structure 103 diffracting the diffracted set of k-vectors lying in at least one of the domains in the first set of three domains 205_1, 205_2, 205_3 into the coupling domain 202 of k-space.

According to an embodiment, the EPE structure 102 is configured to diffract the first set of in-coupled beams via zeroth order and first order diffractions to form the three sets of guided beams associated with the three sets of k-vectors 204_1, 204_2, 204_3 lying in the first set of three domains 205_1, 205_2, 205_3.

According to an embodiment, the EPE structure 102 is configured to diffract the first set of in-coupled beams via zeroth order and first order diffractions to only form the three sets of guided beams associated with the three sets of k-vectors 204_1, 204_2,204_3 lying in the first set of three domains 205_1, 205_2, 205_3.

According to an embodiment, the guided propagation domain 201 surrounds a coupling domain 202, and the first set of three domains 205_1, 205_2, 205_3 form a triangle, such as an equilateral triangle or an isosceles triangle, that at least partially overlaps with the coupling domain 202. With such a diffraction by the EPE structure 102, optical losses can be reduced, since the three sets of k-vectors 204_1, 204_2,204_3 are inside the annular guided propagation domain 201.

Although in some embodiments dis-closed herein the k-vectors 203 corresponding to the set of input beams are located at the k-space origin, this may not be the case for all embodiments. For example, if the set of input beams is not perpendicular to the waveguide 104, k-vectors 203 corresponding to the set of input beams may be located in some other part of the coupling domain 202.

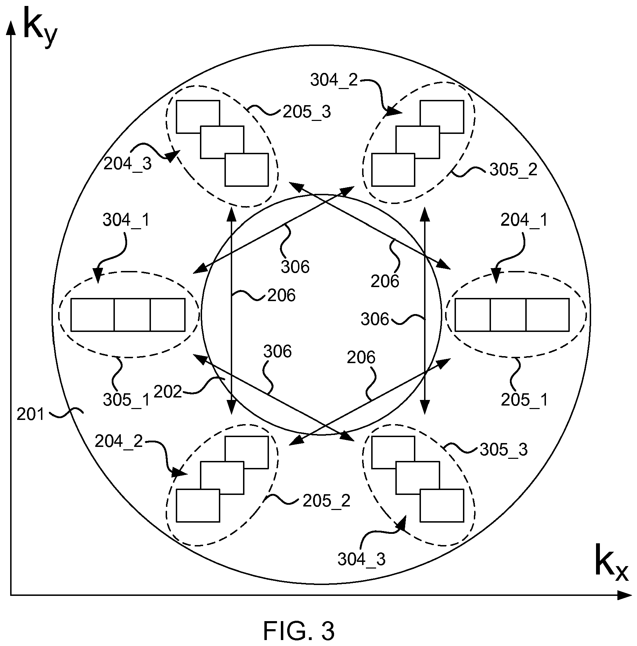

Fig. 3 illustrates a k-space representation of beams diffracted by an exit pupil expansion structure according to anther embodiment.

According to an embodiment, the in-coupling structure 101 is further configured to couple the set of input beams into the waveguide as a second set of in-coupled beams associated with a second set of in-coupled k-vectors 304_1 lying in a second domain 305_1, different from the first domain 205_1, in k-space in the annular guided propagation domain 201 associated with the waveguide.

The EPE structure 102 may be further configured to receive the second set of in-coupled beams and to diffract the second set of in-coupled beams in a second plurality of directions 306 in k-space to form three sets of guided beams associated with three sets of k-vectors 304_1, 304_2, 304_3 lying in a second set of three domains 305_1, 305_2, 305_3, different from the first set of three domains 205_1, 205_2, 205_3, within the annular guided propagation domain 201 including the second domain 305_1.

The first plurality of directions 206 and the second plurality of directions 306 may be due to the same diffraction. However, since the first set of in-coupled beams and the second set of in-coupled beams propagate to different directions, the same diffraction causes k-vectors to lie in the first set of three domains 205_1, 205_2, 205_3 for the first set of in-coupled beams and k-vectors to lie in the second set of three domains 305_1, 305_2, 305_3 for the second set of in-coupled beams.

The out-coupling structure 103 may be further configured to receive, from the EPE structure 102, a second diffracted set of beams associated with a diffracted set of k-vectors lying in at least one of the domains in the second set of three domains 305_1, 305_2, 305_3 and to out-couple the second diffracted set of beams from the waveguide as the set of output beams.

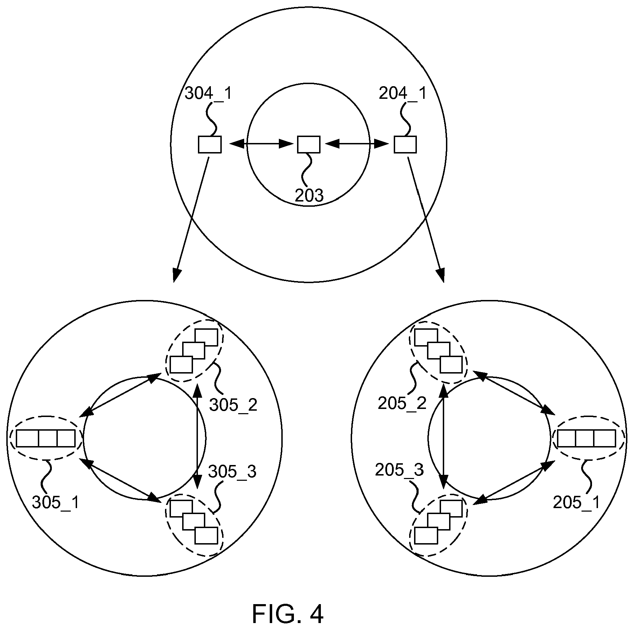

Fig. 4 illustrates a k-space representation of beams diffracted by an in-coupling structure according to an embodiment.

According to an embodiment, the in-coupling structure 101 comprises a one-dimensional diffractive grating.

An in-coupling structure 101 with a one-dimensional diffractive grating can diffract the set of input beams into two opposing propagation directions in the waveguide 104. If the in-coupling structure 101 is positioned close to an edge of the waveguide 104, the in-coupled beams in one of these propagation directions may be mostly lost at the edge of the waveguide 104 and only in-coupled beams in the other propagation direction may be received by the EPE structure 102.

If the geometry of the waveguide 104 is such that both of the two propagation directions can be received by the EPE structure 102, the in-coupled beams can function as the first and the second set of in-coupled beams. The k-space representation for such a situation is illustrated in the embodiment of Fig. 4. The EPE structure 102 can then diffract the first and the second set of in-coupled beams as disclosed herein thus forming the three sets of guided beams associated with three sets of k-vectors 204_1, 204_2, 204_3 lying in the first set of three domains 205_1, 205_2, 205_3 and the three sets of guided beams associated with three sets of k-vectors 304_1, 304_2, 304_3 lying in the second set of three domains 305_1, 305_2, 305_3.

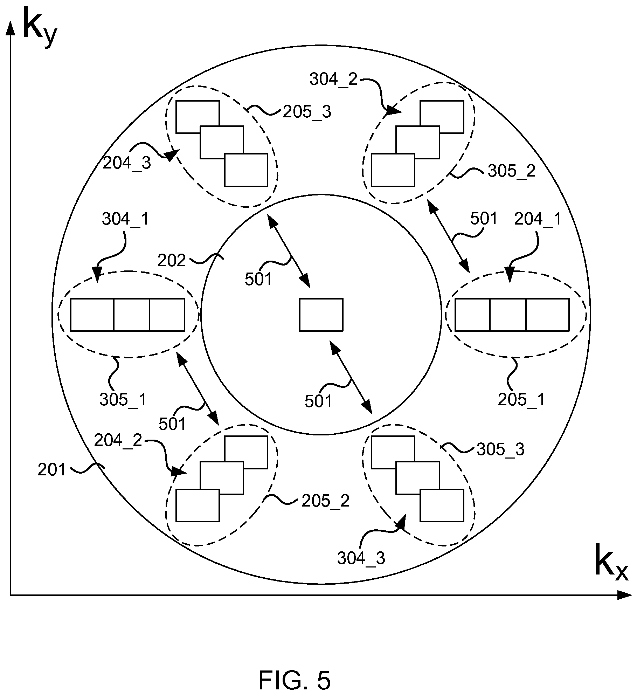

Fig. 5 illustrates a k-space representation of beams diffracted by an out-coupling structure according to an embodiment.

According to an embodiment, the EPE structure 102 is positioned on a first side of the waveguide 104 and the out-coupling structure 103 is positioned on a second side of the waveguide 104 and the out-coupling structure 103 comprises a one-dimensional diffractive grating. The EPE structure 102 and the out-coupling structure 103 may be at least partially aligned. For example, the EPE structure 102 and the out-coupling structure 103 may have a similar shape and/or surface area and they may be substantially aligned. Alternatively, the EPE structure 102 may have a greater surface area than the out-coupling structure 103 and the area of the out-coupling structure 103 may be a subarea of the EPE structure 102. Alternatively, the out-coupling structure 103 may have a greater surface area than the EPE structure 102 and the area of the EPE structure 102 may be a subarea of the out-coupling structure 103.

In the embodiment of Fig. 5, k-space representation of out-coupling in a one-dimensional out-coupling structure 103 is illustrated. In the embodiment of Fig. 5, the out-coupling structure 103 out-couples a first diffracted set of beams associated with a diffracted set of k-vectors lying in one of the domains in the first set of three domains 205_1, 205_2, 205_3 and a second diffracted set of beams associated with a diffracted set of k-vectors lying in one of the domains in the second set of three domains 305_1, 305_2, 305_3.

The out-coupling structure 103 can perform the out-coupling by diffracting the first and second diffracted set of beams in such a direction 501 in k-space that k-vectors from one domain 205_3 in the first set of three domains 205_1, 205_2, 205_3 and one domain 305_3 in the second set of three domains 305_1, 305_2, 305_3 are diffracted into the coupling domain 202.

The first domain 205_1 correspond to a so-called direct beam, since the first domain 205_1 corresponds to a propagation direction of the in-coupled beam 110. If the direct beam is out-coupled without diffraction in the EPE structure 102, a bright stripe may be observed in the output image. If out-coupling structure 103 does not out-couple the direct beam, this issue can be circumvented.

Alternatively or additionally, the bright stripe may be mitigated positioning the out-coupling structure 103 to be between two propagation directions of the in-coupling structure 101.

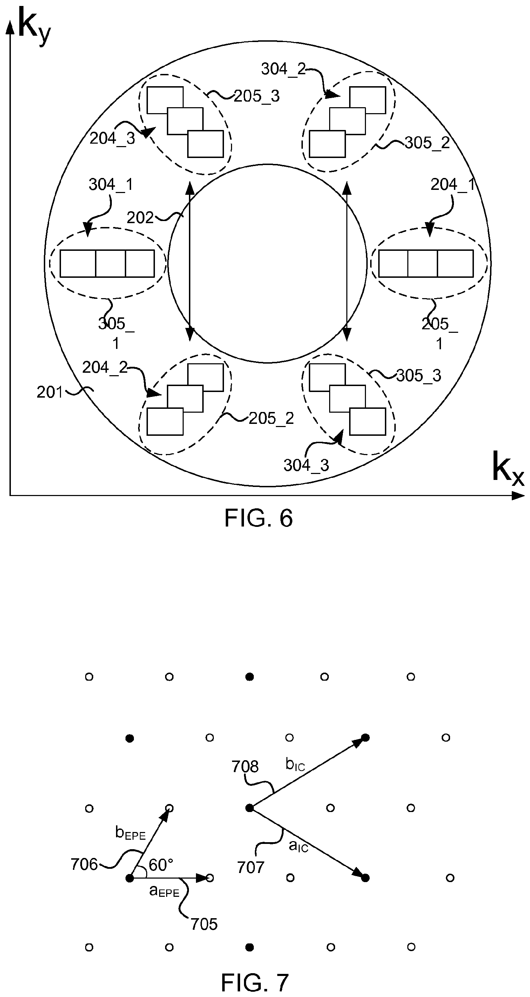

Fig. 6 illustrates a k-space representation of beams further diffracted by an exit pupil expansion structure according to an embodiment.

According to an embodiment, the diffractive grating of the EPE structure 102 is positioned on a first side of the waveguide 104 and the EPE structure 102 further comprises a one-dimensional diffractive grating on a second side of the waveguide configured to cause further diffraction between two domains in the first set of three domains and/or two domains in the second set of three domains.

For example, in the embodiment of Fig. 6, the EPE structure 102 further comprises a one-dimensional diffraction grating on the second side of the waveguide 104. As can be seen from the k-space representation, the one-dimensional diffractive grating on the other side that strengthens jumps between certain propagation directions.

In any embodiment disclosed herein, edges of the waveguide 104 may comprise diffractive gratings, such as one-dimensional diffractive gratings, configured to return any light to the centre of the waveguide 104. These diffractive gratings can be on the first side and/or on the second side of the waveguide 104.

Fig. 7 illustrates a schematic representation of diffractive grating lattice structures according to an embodiment.

Herein, a hexagonal diffractive grating may refer to a diffractive grating that has a two-dimensional hexagonal lattice structure. A hexagonal lattice comprises a 60° angle between the primitive lattice vectors 705, 706 and the primitive lattice vectors 705, 706 are of the same length.

It should be understood that the manufacturing of a lattice structure may be limited by the manufacturing method used. Thus, any lattice that has the aforementioned features within the tolerances of the used manufacturing method may be considered a hexagonal lattice.

It should be understood that the embodiment of Fig. 7 may not represented the physical structure of the diffractive gratings. Rather, the embodiment of Fig. 7 represents an example of the periodicity and orientation of the diffractive gratings in terms of primitive lattice vectors 705, 706, 707, 708. For example, a diffractive grating can comprise ridges/rulings and the primitive lattice vectors 705, 706, 707, 708 can correspond to the spatial periodicity and orientation of these ridges/rulings. For example, such ridges/rungs can run along the lattice elements. Thus, the spatial period of the ridges/rungs, i.e. the distance between two consecutive ridges/rungs, can be perpendicular to the primitive lattice vectors. The structure of these ridges/rungs define the diffraction caused by the diffractive grating.

According to an embodiment, the in-coupling structure 101 comprises an in-coupling diffractive grating for coupling the set of input beams into the waveguide and/or the out-coupling structure 103 comprises an out-coupling diffractive grating for out-coupling the first and/or second diffracted set of beams from the waveguide.

According to an embodiment, the in-coupling structure 101 comprises a spatially periodic diffractive grating having primitive lattice vectors ***a_{IC}*** 707 and ***b_{IC}*** 708, and wherein the exit pupil expansion structure 102 comprises a spatially periodic diffractive grating having primitive lattice vectors ***a_{EPE}*** 705 and ***b_{EPE}*** 706, and wherein an angle between ***a_{IC}*** and ***b_{IC}*** and angle between ***a_{EPE}*** and ***b_{EPE}*** is less than 90 degrees, and wherein ***a_{IC} = 2a_{EPE}-b_{EPE}*** and ***b_{IC}* = *a_{EPE} + b_{EPE} .***

An example of the lattice structure for the diffractive gratings of the in-coupling structure 101 and of the EPE structure 102 is illustrated in the embodiment of Fig. 7. The filled-in lattice elements form the lattice structure of the in-coupling structure 101 while the filled-in and non-filled-in lattice elements form the lattice structure of the EPE structure 102.

Although the lattice structure of the EPE structure is illustrated as hexagonal in the embodiment of Fig. 7, this is only an example and the lattice structure can also take various other forms.

Although the primitive lattice vectors 705, 706, 707, 708 of the EPE structure 102 and of the in-coupling structure 101 are illustrated in one lattice in the embodiment of Fig. 7, this is only for illustrative purposes. Typically, the diffractive grating of the EPE structure 102 is a separate structure from the diffractive grating of the in-coupling structure 101.

The primitive lattice vectors may also be chosen in other ways both for the in-coupling structure 101 and for the EPE structure 102, which can lead to different relations between the primitive vectors.

With the aforementioned relations between the primitive vectors 705, 706 of the EPE structure 102 and of the primitive vectors 707, 708 of the in-coupling structure 101, the EPE structure 102 can have six propagation directions, two for each set of in-coupled beams, with no substantial out-coupling. An example of this in terms of a k-space representation is illustrated in the embodiment of Fig. 3. Since the out-coupling at the EPE structure 102 is reduced, optical efficiency of the display component 100 can be improved.

In some embodiments, the in-coupling structure 101 may comprise some other type of diffractive grating, such as a one dimensional diffractive grating. In such embodiments, the diffractive grating of the EPE structure 102 may be rotated with respect to the propagation direction of the first set of in-coupled beams 110.

According to an embodiment, an angle between a propagation direction of the first set of in-coupled beams 110 and at least one lattice vector of the diffractive grating of the EPE structure 102 is in the range 12 - 38 degrees, 12 - 30 degrees, 15 - 30 degrees, or 20 - 30 degrees.

According to an embodiment, EPE structure 102 comprises a diffractive grating wherein an angle between primitive lattice vectors of the diffractive grating is in the range 21 - 91 degrees and a ratio between lengths of the lattice vectors is in the range 0.62 - 1. Such a diffractive grating may be referred to as a modified hexagonal grating or similar. Alternatively, the angle between the primitive lattice vectors of the diffractive grating may be in the range 25 - 85 degrees, 36 - 76 degrees, 40 - 70 degrees, 45 - 70 degrees, 50 - 70 degrees, or 55 - 65 degrees.

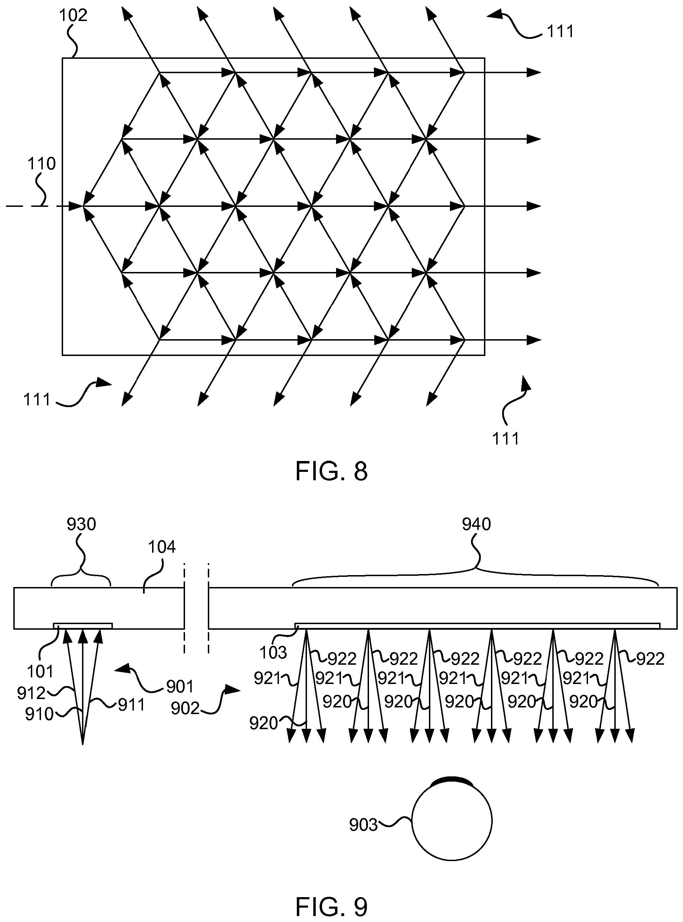

Fig. 8 illustrates a schematic representation of beams in an exit pupil expansion structure according to an embodiment.

The embodiment of Fig. 8 may correspond to the k-space representation of the embodiment of Fig. 2.

As the first set of in-coupled beams 110 propagates inside the waveguide 104 via TIR, each time the beams hit a surface of the waveguide 104 with the diffractive grating of the EPE structure 102, the beams can interact with the diffractive grating.

Each time a beam interacts with the diffractive grating of the EPE structure 102, the beam is diffracted. For example, in the embodiment of Fig. 8, at each point of interaction, part of the beam is diffracted into two directions and part continues along the original propagation direction by reflecting from the grating. The propagation directions correspond to those illustrated in the k-space representation of the embodiment of Fig. 2. Thus, the EPE structure 102 can expand the original image represented by the first set of in-coupled beams.

In the embodiment of Fig. 8, one set of in-coupled beams arrives to the EPE structure 102. If a second set of in-coupled beams arrived to the EPE structure 102, more propagation direction could be observed. For example, for the propagation directions illustrated in the embodiment of Fig. 3, there would be an opposite propagation direction for each propagation direction illustrated in the embodiment of Fig. 8.

Fig. 9 illustrates a schematic representation of correspondence between the set of input beams and the set of output beams.

The out-coupling structure 103 can out-couple the light from the waveguide 104 each time the light interacts with the out-coupling structure 103. Thus, the image can be both expanded and out-coupled by the out-coupling structure 103.

A beam 910 in the set of input beams 901 corresponding to a middle section of an image can be converted into corresponding output beams 920 in the set of output beams 902 that are aligned with an optical axis perpendicular to the exit pupil 940 of the waveguide 104.

A beam 911 in the set of input beams 901 corresponding to the right side of the image can be converted into corresponding output beams 921 in the set output beams 902 that exit the waveguide 104 at such an angle that they appear to have originated from a location in the right portion of the field of view of the user 903. Similarly, a beam 912 in the set of input beams 901 corresponding to the left side of the image can be converted into corresponding output beams 922 in the set of output beams 902 that exit the waveguide 104 at such an angle that they appear to have originated from a location in the left portion of the field of view of the user 903.

Although the beams 920, 921, 922 corresponding to the different parts of the image in set of output beams 902 are illustrated to be output from singular points from the waveguide 104, this is only for illustrative purposes. In practice, each beam 920, 921, 922 may be output from a different part of the waveguide 104.

Output beams in the set of output beams 902 corresponding to a specific point of the image may comprise beams that propagate along parallel paths, as shown in the embodiment of Fig. 9, or diverging paths. The former case results in the image being projected so as to appear to have originated from optical infinity, while in the latter case the image is projected so as to appear to have originated from some finite distance.

Thus, the display component 100 can in-couple the set of input beams 901 and guide them to form an exit pupil 940, which is larger than the entrance pupil 930. The display component 100 can convert a given input beam at a specific angle in the set of input beams 901 into many corresponding beams which are output across the exit pupil 940 in the set of output beams 902 at an angle that is correlated with that the specific input beam.

Both the EPE structure 102 and the out-coupling structure 103 can be configured to expand the image. For example, the EPE structure 102 may expand the image in one direction in a manner similar to the embodiment of Fig. 8 and the out-coupling structure 103 can expand the image in a perpendicular direction, for example, in a manner similar to the embodiment of Fig. 9. Alternatively, the EPE structure 102 may be configured to expand the image in two perpendicular directions and the out-coupling structure 103 may be configured to out-couple the light from the waveguide 104.

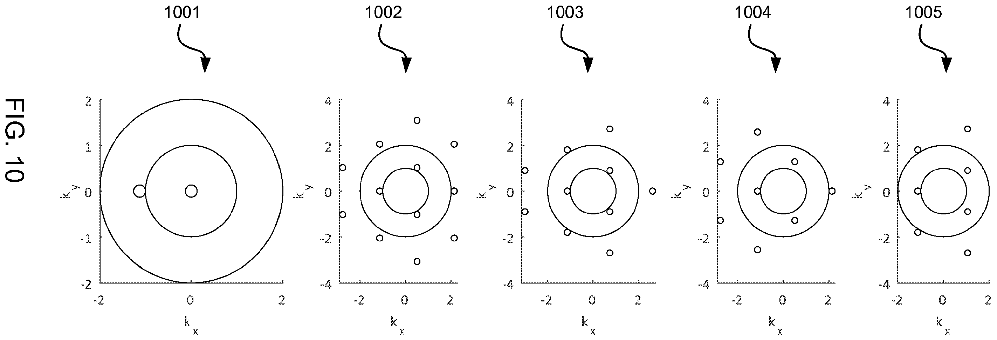

Fig. 10 illustrates a schematic representation of simulation results according to a plurality of embodiments.

The left-most k-space representation 1001 illustrates diffraction caused by an in-coupling structure 101 with a one-dimensional diffractive grating. The other k-space representations 1002 - 1005 illustrate diffraction caused by EPE structures 102 with different lattice configurations when the EPE structure 102 receives the first set of in-coupled beams diffracted by the in-coupling structure 101 with a one-dimensional diffractive grating.

K-space representation 1002 corresponds to an EPE structure 102 with a lattice structure in which a ratio between lengths of the lattice vectors is 0.94 and the angle between the lattice vectors is 122°.

K-space representation 1003 corresponds to an EPE structure 102 with a lattice structure in which a ratio between lengths of the lattice vectors is 0.87 and the angle between the lattice vectors is 116°.

K-space representation 1004 corresponds to an EPE structure 102 with a lattice structure in which a ratio between lengths of the lattice vectors is 0.81 and the angle between the lattice vectors is 128°.

K-space representation 1005 corresponds to an EPE structure 102 with a lattice structure in which a ratio between lengths of the lattice vectors is 0.76 and the angle between the lattice vectors is 112°.

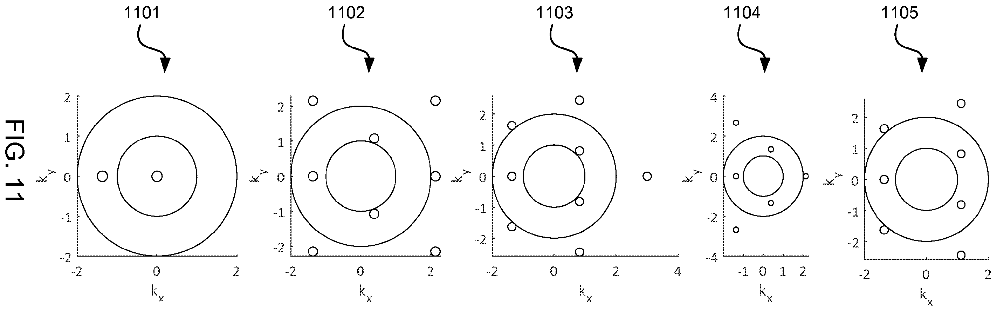

Fig. 11 illustrates a schematic representation of simulation results according to another plurality of embodiments.

The left-most k-space representation 1101 illustrates diffraction caused by an in-coupling structure 101 with a one-dimensional diffractive grating. The other k-space representations 1102 - 1105 illustrate diffraction caused by EPE structures 102 with different lattice configurations when the EPE structure 102 receives the first set of in-coupled beams diffracted by the in-coupling structure 101 with a one-dimensional diffractive grating.

K-space representation 1102 corresponds to an EPE structure 102 with a lattice structure in which a ratio between lengths of the lattice vectors is 0.96 and the angle between the lattice vectors is 122°.

K-space representation 1103 corresponds to an EPE structure 102 with a lattice structure in which a ratio between lengths of the lattice vectors is 0.70 and the angle between the lattice vectors is 110°.

K-space representation 1104 corresponds to an EPE structure 102 with a lattice structure in which a ratio between lengths of the lattice vectors is 0.82 and the angle between the lattice vectors is 127°.

K-space representation 1105 corresponds to an EPE structure 102 with a lattice structure in which a ratio between lengths of the lattice vectors is 0.62 and the angle between the lattice vectors is 108°.

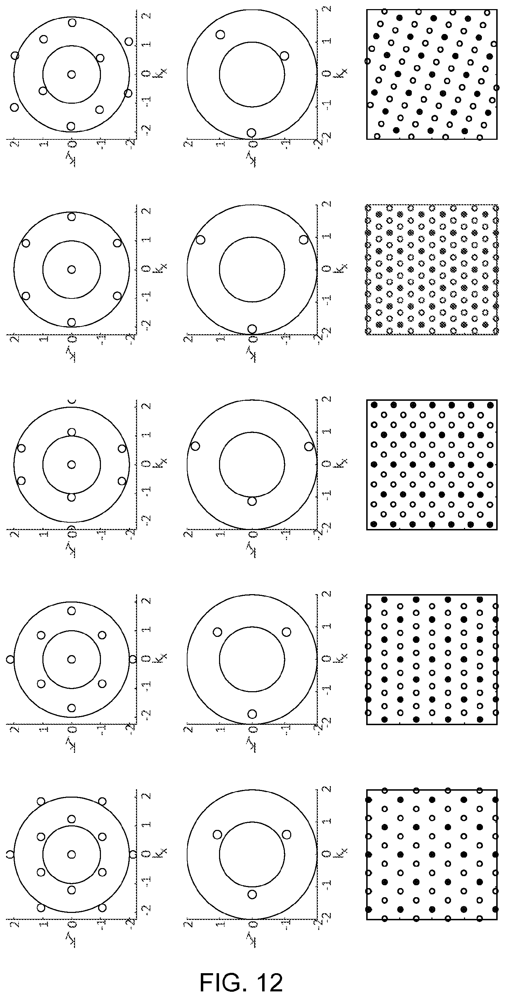

Fig. 12 illustrates a schematic representation of simulation results according to another plurality of embodiments.

In the embodiments of Fig. 12, each column corresponds to a lattice structure illustrated in the bottom. All of the illustrated lattice elements form the lattice structure of the EPE structure 102 while the filled-in lattice cites form the lattice structure of the in-coupling structure 101. The primitive vectors of these lattice structures follow the aforementioned ***a_{IC}*** = ***2a_{EPE}-b_{EPE}, b_{IC} = a_{EPE} + b_{EPE}*** relation. The top of each column illustrates the k-space representation of each in-coupling structure 101 while the middle illustrates the k-space representation of the EPE structure 102.

In the simulation results illustrated in Figs. 10, 11, and 12 the simulation results are illustrated only for one wavelength.

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. A display component (100), comprising:
- a waveguide (104);
- an in-coupling structure (101) configured to couple a set of input beams (901) into the waveguide (104) as a first set of in-coupled beams (110) associated with a first set of in-coupled k-vectors (204_1) lying in a first domain (205_1) in k-space in an annular guided propagation domain (201) associated with the waveguide (104) wherein the in-coupling structure (101) comprises an in-coupling diffractive grating for coupling the set of input beams (901) into the waveguide (104);
- an exit pupil expansion structure (102) comprising a diffractive grating and configured to receive the first set of in-coupled beams (110) and to diffract the first set of in-coupled beams (110) in a first plurality of directions (206) in k-space to form three sets of guided beams associated with three sets of k-vectors (204_1, 204_2, 204_3) lying in a first set of three domains (205_1, 205_1, 205_3) within the annular guided propagation domain (201) including the first domain (205_1);
- an out-coupling structure (103) configured to receive, from the exit pupil expansion structure (102), a first diffracted set of beams (111) associated with a diffracted set of k-vectors lying in at least one of the domains in the first set of three domains (205_1, 205_1, 205_3), and to out-couple the first diffracted set of beams (111) from the waveguide (104) as a set of output beams (902)
**characterized in that**
the in-coupling structure (101) is further configured to couple the set of input beams (901) into the waveguide (104) as a second set of in-coupled beams associated with a second set of in-coupled k-vectors (304_1) lying in a second domain (305_1), different from the first domain (205_1), in k-space in the annular guided propagation domain (201) associated with the waveguide (104), and
wherein the exit pupil expansion structure (102) is further configured to receive the second set of in-coupled beams and to diffract the second set of in-coupled beams in a second plurality of directions (306) in k-space to form three sets of guided beams associated with three sets of k-vectors (304_1, 304_2, 304_2) lying in a second set of three domains (305_1, 305_2, 305_3), different from the first set of three domains (305_1, 305_2, 305_3), within the annular guided propagation domain (201) including the second domain (305_1), and
wherein the out-coupling structure (103) is further configured to receive, from the exit pupil expansion structure (102), a second diffracted set of beams associated with a diffracted set of k-vectors lying in at least one of the domains in the second set of three domains (205_1, 205_2, 205_3) and to out-couple the second diffracted set of beams from the waveguide (104) as the set of output beams (902).

2. The display component (100) according to claim 1, wherein the out-coupling structure (103) comprises an out-coupling diffractive grating for out-coupling the first and/or second diffracted set of beams from the waveguide.

3. The display component (100) according to any preceding claim, wherein the in-coupling structure comprises a spatially periodic diffractive grating having primitive lattice vectors ***a_{IC}*** (707) and ***b_{IC}*** (708), and wherein the exit pupil expansion structure comprises a spatially periodic diffractive grating having primitive lattice vectors ***a_{EPE}*** (705) and ***b_{EPE}*** (706), and wherein an angle between ***a_{IC}*** (707) and ***b_{IC}*** (708) and angle between ***a_{EPE}*** (705) and ***b_{EPE}*** (706) is less than 90 degrees, and wherein ***a_{IC}* = *2a_{EPE}-b_{EPE}*** and ***b_{IC}* =** ***a_{EPE} + b_{EPE}** .*

4. The display component (100) according to claim 3, wherein the out-coupling structure (103) comprises a spatially periodic hexagonal diffractive grating having the primitive lattice vectors ***a_{IC}*** (707) and ***b_{IC}*** (708).

5. The display component according to any of claims 1 - 3, wherein the exit pupil expansion structure (102) is positioned on a first side of the waveguide (104) and the out-coupling structure (103) is positioned on a second side of the waveguide (104), and wherein the out-coupling structure (103) comprises a one-dimensional diffractive grating.

6. The display component (100) according to any preceding claim, wherein a hexagonal diffractive grating of the exit pupil expansion structure (102) is positioned on a first side of the waveguide (104) and the exit pupil expansion structure (102) further comprises a one-dimensional diffractive grating on a second side of the waveguide (104) configured to cause further diffraction between the first set of three domains (205_1, 205_2, 205_3) and/or the second set of three domains (305_1, 305_2, 305_3).

7. The display component (100) according to any of the preceding claim, wherein the exit pupil expansion structure (102) is configured to diffract the first set of in-coupled beams (110) via zeroth order and first order diffractions to form the three sets of guided beams associated with the three sets of k-vectors (204_1, 204_2, 204_3) lying in the first set of three domains (205_1, 205_2, 205_3).

8. The display component (100) according to any preceding claim, wherein the exit pupil expansion structure (102) is configured to diffract the first set of in-coupled beams via zeroth order and first order diffractions to only form the three sets of guided beams associated with the three sets of k-vectors (204_1, 204_2, 204_3) lying in the first set of three domains (205_1, 205_2, 205_3).

9. The display component (100) according to any preceding claim, wherein the guided propagation domain (201) surrounds a coupling domain (202), and wherein the first set of three domains forms a triangle, an equilateral triangle, or an isosceles triangle that at least partially overlaps with the coupling domain (202) .

10. A display device comprising a display component according to any preceding claim.

11. A display device according to claim 10, comprising a scanner-based optical engine, e.g., a laser-scanning optical engine, for directing the set of input beams (901) to the in-coupling structure.

12. A display device according to claim 11 or 11 implemented as a see-through display device.

13. A display device according to any of claims 10 - 12 implemented as a head-mounted display device.

## Patentansprüche

1. Eine Anzeigekomponente (100), umfassend:
- einen Wellenleiter (104);
- eine Einkopplungsstruktur (101), die so konfiguriert ist, dass sie einen Satz von Eingangsstrahlen (901) in den Wellenleiter (104) als einen ersten Satz von eingekoppelten Strahlen (110) koppelt, die mit einem ersten Satz von eingekoppelten k-Vektoren (204_1) verbunden sind, die in einer ersten Domäne (205_1) im k-Raum in einer ringförmigen geführten Ausbreitungsdomäne liegen (201), die mit dem Wellenleiter (104) assoziiert ist, wobei die Einkopplungsstruktur (101) ein Einkopplungsbeugungsgitter zum Einkoppeln des Satzes von Eingangsstrahlen (901) in den Wellenleiter (104) umfasst;
- eine Austrittspupillen-Erweiterungsstruktur (102), die ein Beugungsgitter umfasst und so konfiguriert ist, dass sie den ersten Satz von eingekoppelten Strahlen (110) empfängt und den ersten Satz von eingekoppelten Strahlen (110) in einer ersten Vielzahl von Richtungen (206) im k-Raum beugt, um drei Sätze von geführten Strahlen zu bilden, die mit drei Sätzen von k-Vektoren (204_1, 204_2, 204_3) assoziiert sind, die in einem ersten Satz von drei Domänen (205_1, 205_1, 205_3) innerhalb der ringförmigen geführten Ausbreitungsdomäne (201) liegen, die die erste Domäne (205_1) umfasst;
- eine Auskoppelstruktur (103), die so konfiguriert ist, dass sie von der Austrittspupillen-Erweiterungsstruktur (102) einen ersten gebeugten Satz von Strahlen (111) empfängt, der einem gebeugten Satz von k-Vektoren zugeordnet ist, die in mindestens einer der Domänen im ersten Satz von drei Domänen (205_1, 205_1, 205_3) und zum Auskoppeln des ersten gebeugten Strahlsatzes (111) aus dem Wellenleiter (104) als einen Satz von Ausgangsstrahlen (902) auszukoppeln,
**dadurch gekennzeichnet, dass**
die Einkopplungsstruktur (101) ferner so konfiguriert ist, dass sie den Satz von Eingangsstrahlen (901) in den Wellenleiter (104) als einen zweiten Satz von eingekoppelten Strahlen koppelt, die mit einem zweiten Satz von eingekoppelten k-Vektoren (304_1) assoziiert sind, die in einer zweiten Domäne (305_1) liegen, die sich von der ersten Domäne (205_1) unterscheidet, im k-Raum in der ringförmigen geführten Ausbreitungsdomäne (201), die mit dem Wellenleiter (104) assoziiert ist, und
wobei die Austrittspupillen-Expansionsstruktur (102) ferner so konfiguriert ist, dass sie den zweiten Satz von eingekoppelten Strahlen empfängt und den zweiten Satz von eingekoppelten Strahlen in einer zweiten Vielzahl von Richtungen (306) im k-Raum beugt, um drei Sätze von geführten Strahlen zu bilden, die mit drei Sätzen von k-Vektoren (304_1, 304_2, 304_2) assoziiert sind, die in einer zweiten Gruppe von drei Domänen (305_1, 305_2, 305_3) liegen, die sich von der ersten Gruppe von drei Domänen (305_1, 305_2, 305_3) unterscheiden, innerhalb der ringförmigen geführten Ausbreitungsdomäne (201), die die zweite Domäne (305_1) umfasst, und
wobei die Auskoppelstruktur (103) ferner so konfiguriert ist, dass sie von der Austrittspupillen-Erweiterungsstruktur (102) einen zweiten gebeugten Satz von Strahlen empfängt, der mit einem gebeugten Satz von k-Vektoren assoziiert ist, die in mindestens einer der Domänen in der zweiten Gruppe von drei Domänen (205_1, 205_2, 205_3) liegt und zum Auskoppeln des zweiten gebeugten Strahlensatzes aus dem Wellenleiter (104) als den Satz von Ausgangsstrahlen (902).

2. Die Anzeigekomponente (100) gemäß Anspruch 1, wobei die Auskoppelstruktur (103) ein auskoppelndes Beugungsgitter zum Auskoppeln des ersten und/oder zweiten gebeugten Strahlensatzes aus dem Wellenleiter umfasst.

3. Die Anzeigeeinheit (100) gemäß einem der vorstehenden Ansprüche, wobei die Einkopplungsstruktur ein räumlich periodisches Beugungsgitter mit primitiven Gittervektoren ***a_{IC}*** (707) und ***b_{IC}*** (708) umfasst und wobei die Austrittspupillen-Erweiterungsstruktur ein räumlich periodisches Beugungsgitter mit primitiven Gittervektoren ***a_{EPE}*** (705) und ***b_{EPE}*** (706) umfasst und wobei ein Winkel zwischen ***a_{IC}*** (707) und ***b_{IC}*** (708) und der Winkel zwischen ***a_{EPE}*** (705) und ***b_{EPE}*** (706) weniger als 90 Grad beträgt, und wobei ***a_{IC} = 2a_{EPE} - b_{EPE}*** und ***b_{IC} = a_{EPE} + b_{EPE}** .*

4. Die Anzeigekomponente (100) gemäß Anspruch 3, wobei die Auskoppelstruktur (103) ein räumlich periodisches hexagonales Beugungsgitter mit den primitiven Gittervektoren ***a_{IC}*** (707) und *b_{IC}* umfasst.

5. Die Anzeigeeinheit gemäß einem der Ansprüche 1 bis 3, wobei die Austrittspupillen-Erweiterungsstruktur (102) auf einer ersten Seite des Wellenleiters (104) positioniert ist und die Auskoppelstruktur (103) auf einer zweiten Seite des Wellenleiters (104) positioniert ist, und wobei die Auskoppelstruktur (103) ein eindimensionales Beugungsgitter umfasst.

6. Die Anzeigeeinheit (100) gemäß einem der vorstehenden Ansprüche, wobei ein hexagonales Beugungsgitter der Austrittspupillen-Erweiterungsstruktur (102) auf einer ersten Seite des Wellenleiters (104) positioniert ist und die Austrittspupillen-Erweiterungsstruktur (102) ferner ein eindimensionales Beugungsgitter auf einer zweiten Seite des Wellenleiters (104) umfasst, das so konfiguriert ist, dass es eine weitere Beugung zwischen dem ersten Satz von drei Domänen (205_1, 205_2, 205_3) und/oder dem zweiten Satz von drei Domänen (305_1, 305_2, 305_3) bewirkt.

7. Die Anzeigekomponente (100) gemäß einem der vorstehenden Ansprüche, wobei die Austrittspupillen-Erweiterungsstruktur (102) so konfiguriert ist, dass sie den ersten Satz von eingekoppelten Strahlen (110) über Beugungen nullter und erster Ordnung beugt, um die drei Sätze von geführten Strahlen zu bilden, die mit den drei Sätzen von k-Vektoren (204_1, 204_2, 204_3) zu bilden, die in dem ersten Satz von drei Domänen (205_1, 205_2, 205_3) liegen.

8. Die Anzeigeeinrichtung (100) gemäß einem der vorstehenden Ansprüche, wobei die Austrittspupillen-Erweiterungsstruktur (102) so konfiguriert ist, dass sie den ersten Satz eingekoppelter Strahlen über Beugungen nullter und erster Ordnung beugt, um nur die drei Sätze geführter Strahlen zu bilden, die mit den drei Sätzen von k-Vektoren (204_1, 204_2, 204_3) assoziiert sind, die in dem ersten Satz von drei Domänen (205_1, 205_2, 205_3) liegen.

9. Die Anzeigeeinheit (100) gemäß einem der vorstehenden Ansprüche, wobei die geführte Ausbreitungsdomäne (201) eine Kopplungsdomäne (202) umgibt und wobei der erste Satz von drei Domänen ein Dreieck, ein gleichseitiges Dreieck oder ein gleichschenkliges Dreieck bildet, das sich zumindest teilweise mit der Kopplungsdomäne (202) überlappt.

10. Anzeigevorrichtung, die eine Anzeigekomponente gemäß einem der vorstehenden Ansprüche umfasst.

11. Anzeigevorrichtung gemäß Anspruch 10, die eine scannerbasierte optische Engine, z. B. eine Laser-Scanningoptische Engine, umfasst, um den Satz von Eingangsstrahlen (901) auf die Einkopplungsstruktur zu richten.

12. Anzeigevorrichtung gemäß Anspruch 11 oder 11, die als durchsichtige Anzeigevorrichtung ausgeführt ist.

13. Anzeigevorrichtung gemäß einem der Ansprüche 10 bis 12, die als am Kopf befestigte Anzeigevorrichtung ausgeführt ist.

## Revendications

1. Composant d'affichage (100), comprenant :
- un guide d'ondes (104) ;
- une structure de couplage entrant (101) configurée pour coupler un ensemble de faisceaux d'entrée (901) dans le guide d'ondes (104) en tant que premier ensemble de faisceaux couplés entrants (110) associé à un premier ensemble de vecteurs k couplés entrants (204_1) se trouvant dans un premier domaine (205_1) dans l'espace k dans un domaine de propagation guidée annulaire (201) associé au guide d'ondes (104) dans lequel la structure de couplage entrant (101) comprend un réseau diffractif de couplage entrant pour le couplage de l'ensemble de faisceaux d'entrée (901) dans le guide d'ondes (104) ;
- une structure d'expansion de pupille de sortie (102) comprenant un réseau diffractif et configurée pour recevoir le premier ensemble de faisceaux couplés entrants (110) et pour diffracter le premier ensemble de faisceaux couplés entrants (110) dans une première pluralité de directions (206) dans l'espace k pour former trois ensembles de faisceaux guidés associés à trois ensembles de vecteurs k (204_1, 204_2, 204_3) se trouvant dans un premier ensemble de trois domaines (205_1, 205_1, 205_3) à l'intérieur du domaine de propagation guidée annulaire (201) comportant le premier domaine (205_1) ;
- une structure de couplage sortant (103) configurée pour recevoir, à partir de la structure d'expansion de pupille de sortie (102), un premier ensemble diffracté de faisceaux (111) associé à un ensemble diffracté de vecteurs k se trouvant dans au moins l'un des domaines du premier ensemble de trois domaines (205_1, 205_1, 205_3), et pour coupler en sortie le premier ensemble diffracté de faisceaux (111) à partir du guide d'ondes (104) en tant qu'ensemble de faisceaux de sortie (902)
**caractérisé en ce que**
la structure de couplage entrant (101) est également configurée pour coupler l'ensemble de faisceaux d'entrée (901) dans le guide d'ondes (104) en tant que second ensemble de faisceaux couplés entrants associé à un second ensemble de vecteurs k couplés entrants (304_1) se trouvant dans un second domaine (305_1), différent du premier domaine (205_1), dans l'espace k dans le domaine de propagation guidée annulaire (201) associé au guide d'ondes (104), et
dans lequel la structure d'expansion de pupille de sortie (102) est également configurée pour recevoir le second ensemble de faisceaux couplés entrants et pour diffracter le second ensemble de faisceaux couplés entrants dans la seconde pluralité de directions (306) dans l'espace k pour former trois ensembles de faisceaux guidés associés aux trois ensembles de vecteurs k (304_1, 304_2, 304_2) se trouvant dans un second ensemble de trois domaines (305_1, 305_2, 305_3), différent à partir du premier ensemble de trois domaines (305_1, 305_2, 305_3), à l'intérieur du domaine de propagation guidée annulaire (201) comportant le second domaine (305_1), et
dans lequel la structure de couplage sortant (103) est également configurée pour recevoir, à partir de la structure d'expansion de pupille de sortie (102), un second ensemble diffracté de faisceaux associé à un ensemble diffracté de vecteurs k se trouvant dans au moins l'un des domaines du second ensemble de trois domaines (205_1, 205_2, 205_3), et pour coupler en sortie le second ensemble diffracté de faisceaux à partir du guide d'ondes (104) en tant qu'ensemble de faisceaux de sortie (902).

2. Composant d'affichage (100) selon la revendication 1, dans lequel la structure de couplage sortant (103) comprend un réseau diffractif de couplage sortant pour le couplage sortant du premier et/ou du second ensemble diffracté de faisceaux provenant du guide d'ondes.

3. Composant d'affichage (100) selon une quelconque revendication précédente, dans lequel la structure de couplage entrant comprend un réseau diffractif spatialement périodique ayant des vecteurs de réseau primitifs ***a_{IC}*** (707) et ***b_{IC}*** (708), et dans lequel la structure d'expansion de pupille de sortie comprend un réseau diffractif spatialement périodique ayant des vecteurs de réseau primitifs ***a_{EPE}*** (705) et ***b_{EPE}*** (706), et dans lequel un angle entre ***a_{IC}*** (707) et ***b_{IC}*** (708) et un angle entre ***a_{EPE}*** (705) et ***b_{EPE}*** (706) sont inférieurs à 90 degrés, et dans lequel ***a_{IC}*** = ***2a_{EPE-}b_{EPE}*** et ***b_{IC}*** = ***a_{EPE} + b_{EPE}.***

4. Composant d'affichage (100) selon la revendication 3, dans lequel la structure de couplage sortant (103) comprend un réseau diffractif hexagonal spatialement périodique ayant les vecteurs de réseau primitifs ***a_{IC}*** (707) et ***b_{IC}*** (708).

5. Composant d'affichage selon l'une quelconque des revendications 1 à 3, dans lequel la structure d'expansion de pupille de sortie (102) est positionnée sur un premier côté du guide d'ondes (104) et la structure de couplage sortant (103) est positionnée sur un second côté du guide d'ondes (104), et dans lequel la structure de couplage sortant (103) comprend un réseau diffractif unidimensionnel.

6. Composant d'affichage (100) selon une quelconque revendication précédente, dans lequel un réseau diffractif hexagonal de la structure d'expansion de pupille de sortie (102) est positionné sur un premier côté du guide d'ondes (104) et la structure d'expansion de pupille de sortie (102) comprend également un réseau diffractif unidimensionnel sur un second côté du guide d'ondes (104) configuré pour provoquer une diffraction supplémentaire entre le premier ensemble de trois domaines (205_1, 205_2, 205_3) et/ou le second ensemble de trois domaines (305_1, 305_2, 305_3).

7. Composant d'affichage (100) selon une quelconque revendication précédente, dans lequel la structure d'expansion de pupille de sortie (102) est configurée pour diffracter le premier ensemble de faisceaux couplés sortant (110) via des diffractions d'ordre zéro et d'ordre premier pour former les trois ensembles de faisceaux guidés associés aux trois ensembles de vecteurs k (204_1, 204_2, 204_3) se trouvant dans le premier ensemble de trois domaines (205_1, 205_2, 205_3).

8. Composant d'affichage (100) selon une quelconque revendication précédente, dans lequel la structure d'expansion de pupille de sortie (102) est configurée pour diffracter le premier ensemble de faisceaux couplés sortant via des diffractions d'ordre zéro et d'ordre premier pour former uniquement les trois ensembles de faisceaux guidés associés aux trois ensembles de vecteurs k (204_1, 204_2, 204_3) se trouvant dans le premier ensemble de trois domaines (205_1, 205_2, 205_3).

9. Composant d'affichage (100) selon une quelconque revendication précédente, dans lequel le domaine de propagation guidée (201) entoure un domaine de couplage (202), et dans lequel le premier ensemble de trois domaines forme un triangle, un triangle équilatéral, ou un triangle isocèle qui chevauche au moins partiellement le domaine de couplage (202).

10. Dispositif d'affichage comprenant un composant d'affichage selon une quelconque revendication précédente.

11. Dispositif d'affichage selon la revendication 10, comprenant un moteur optique basé sur un scanner, par exemple un moteur optique à balayage laser, pour diriger l'ensemble de faisceaux d'entrée (901) vers la structure de couplage entrant.

12. Dispositif d'affichage selon la revendication 11 ou 11 mis en œuvre comme dispositif d'affichage transparent.

13. Dispositif d'affichage selon l'une quelconque des revendications 10 à 12, mis en œuvre comme dispositif d'affichage monté sur la tête.
